# EUROPEAN PATENT SPECIFICATION

(11) **EP 2 412 973 B1**
(45) Date of publication and mention of the grant of the patent: **06.03.2019**
(21) Application number: 11005748.6
(22) Date of filing: 14.07.2011
(51) Int. Cl.: F03D 80/00, F03D 15/20, F03D 7/02, F03D 80/70, F03D 9/25

(54) **A slip ring unit for direct drive wind turbines**
Schleifringeinheit für getriebelose Windturbinen
Unité de bague collectrice pour éoliennes à entraînement direct .

(30) Priority: 28.07.2010 ES 201000979
(43) Date of publication of application: 01.02.2012
(73) Proprietor: ADWEN Offshore, S.L., 48170 Zamudio (ES)
(72) Inventor: Glumsoe, Joergen, 48170 Zamudio-Bizkaia (ES)
(74) Representative: Padial Martinez, Ana Belen

(56) References cited:
- EP-A1- 2 063 114
- EP-A2- 2 144 341
- WO-A1-82/04466
- WO-A2-2005/103489
- WO-A2-2010/048560
- DE-B3-102004 030 929

## Description

### FIELD OF THE INVENTION

This invention relates to a pitch controlled, direct drive wind turbine and in particular to the slip ring unit needed for providing electrical supply and signals to certain wind turbine equipment such as the pitch control equipment.

### BACKGROUND

Wind turbines are devices that convert mechanical energy to electrical energy. A typical wind turbine includes a nacelle mounted on a tower housing a drive train for transmitting the rotation of a wind rotor to an electric generator and other components such as a yaw drive which aligns the wind turbine with the wind direction, several controllers and a braking system. The wind rotor comprises a rotor hub supporting a number of blades extending radially therefrom for capturing the kinetic energy of the wind and causing the driving train rotational motion. The rotor blades have an aerodynamic shape such that when a wind blows across the surface of the blade, a lift force is generated causing the rotation of a shaft which is connected -directly or through a gearing arrangement- to the electrical generator.

Under known control methods and systems the power produced by a wind turbine increases with wind speed until a rated nominal power output is reached. This is done regulating the pitching action of the blades by a pitch control system comprising motors and other devices that require a power supply. Also feathering the blades for breaking the turbine, is carried out by the pitch system.

For wind turbines with gear unit it is usual to mount a slip ring unit on the rear end of the generator in the axis and have the cables to pass through the generator and gearbox to the rotor hub. For a direct driven wind turbine with non-rotating shaft the typical way of transferring electrical energy and electrical signals is to build slip rings around the shaft, for example around the front end portion of the shaft as disclosed in EP2063114A1, EP2144341A2 and WO2010048560A2. The design then has to be fit to the actual measures of the shaft and due to the large diameters the contact speed is relatively high. Other slip ring arrangements which are not designed as detachable units are disclosed in DE102004030929B3 and WO8204466A1.

This invention is focused to the solution of these problems.

### SUMMARY OF THE INVENTION

It is an object of the present invention to provide a direct drive wind turbine having an optimized slip ring unit for providing electrical current and/or transferring electrical signals to devices installed in a wind turbine rotating part.

It is another object of the present invention to provide a direct drive wind turbine having a slip ring unit for providing electrical current and/or transferring electrical signals to devices installed in a wind turbine rotating part that can be easily mounted.

These and other objects are met by providing a wind turbine according to claim 1.

According to the invention, the mounting of said slip ring unit on the front end of the non-rotating shaft is arranged as a detachable mounting. Hereby it is achieved a direct drive wind turbine with a detachable slip ring unit facilitating the access to the rotor hub and the generator to the service staff.

In another preferred embodiments (with different bearing arrangements) the generator is placed up wind the wind rotor, said rotating wind turbine component is the generator rotor and said non-rotating wind turbine component is the non-rotating shaft. Hereby it is achieved a direct drive wind turbine having the generator placed in front of the wind rotor with an slip ring unit that can be easily mounted.

In another preferred embodiments (with different bearing arrangements) the generator is placed down wind the wind rotor, said rotating wind turbine component is the rotor hub and said non-rotating wind turbine component is the non-rotating shaft. Hereby it is achieved a direct drive wind turbine having the generator placed behind the wind rotor with an slip ring unit that can be easily mounted.

According to the invention, said first connector is an arm connecting the slip ring rotating part with the rotating wind turbine component, so that, taking into account that said second connector is a bracket that enables supporting the slip ring static part on the front end of the non-rotating shaft, it is achieved to provide a direct drive wind turbine with an optimized slip ring unit that can be implemented using commercial components.

Other features and advantages of the present invention will be understood from the following detailed description in relation with the enclosed drawings.

### BRIEF DESCRIPTION OF DRAWINGS

Figure 1 is a schematic side view of a direct drive wind turbine with the generator placed up wind the wind rotor and common bearings for rotor hub and generator rotor placed in the rotor hub.
Figure 2 is a schematic side view of a direct drive wind turbine with the generator placed up wind the wind rotor and separate bearings for rotor hub and generator rotor.
Figure 3 is a schematic side view of a direct drive wind turbine with the generator placed down wind the rotor and common bearings for rotor hub and generator rotor placed in the generator.
Figure 4 is a schematic side view of a direct drive wind turbine with the generator placed down wind the rotor and common bearings for rotor hub and generator rotor placed in the rotor hub.
Figure 5 is a schematic side view of a direct drive wind turbine with the generator placed down wind the rotor and a common moment bearing for rotor hub and generator rotor.
Figure 6 is a schematic view of a known slip ring unit.

### DETAILED DESCRIPTION OF PREFERRED EMBODIMENTS

This invention refers to a direct drive wind turbine having the generator placed upwind or downwind the wind rotor.

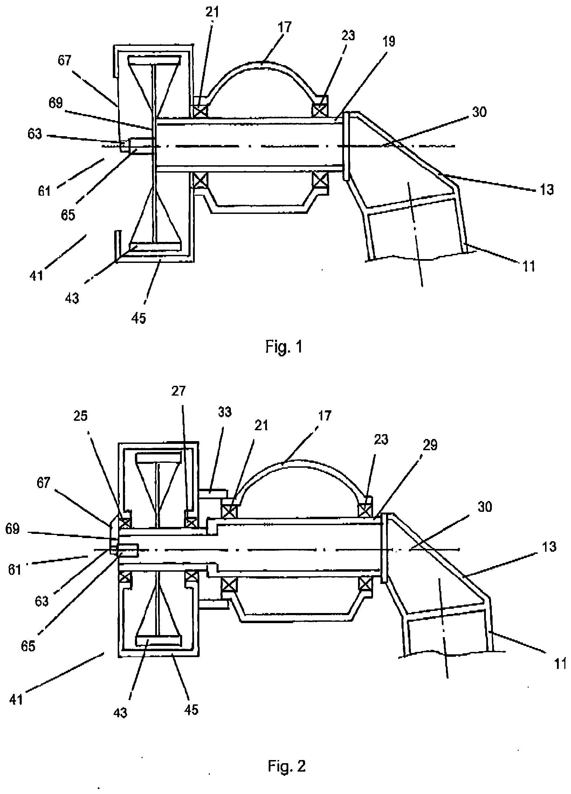

Figures 1 and 2 show two embodiments of a direct drive wind turbine having the generator 41 placed up wind the rotor hub 17 incorporating a slip ring unit 61 according the present invention.

On Figure 1 it can be seen a wind turbine comprising a tower 11 supporting means housed inside a nacelle cover (not shown) for converting the rotational energy of the wind turbine rotor into electrical energy by means of a generator 41, preferably a permanent magnet generator. The wind turbine rotor comprises a rotor hub 17 and, typically, three blades. The rotor hub 17 is supported by two main bearings 21, 23, the first bearing 21 being placed near to the rotor hub front and the second bearing 23 near to the rotor hub rear. Both bearings 21, 23 are positioned on a non-rotating main shaft 19 connected to the wind turbine supporting frame 13. The wind turbine generator 41 is placed in front of the rotor hub 17. The generator stator 43 is connected to the non-rotating main shaft 19 and the generator rotor 45 is connected to the rotor hub 17.

Like in other wind turbine configurations, certain devices installed in a wind turbine rotating part, particularly the devices used for pitch control, shall be provided with a power supply through a slip ring unit that, as it is well known in the art, is a device for transferring electrical currents between rotating and stationary parts.

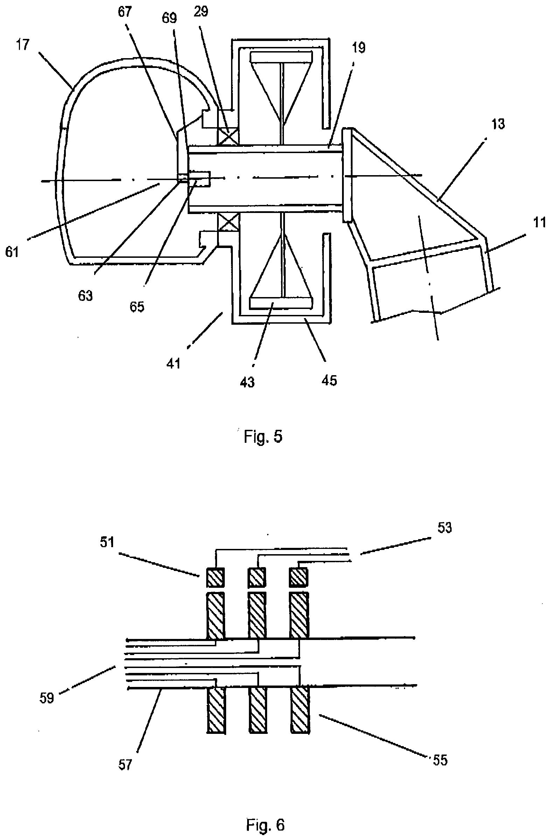

A typical slip ring assembly, shown in Figure 6, for wind turbines whose drive train includes a gear box comprises a static part 51 connected to input lines 53 and a rotating part 55 (comprising slip rings secured to the rotatable shaft 57) connected to output lines 59 that feed said devices. The contact between the static part 51 and the rotating part 55 is assured by a spring or any other suitable means. The static and rotating parts 51, 55 may comprise separated sub-parts for transferring, for instance, power, commands and data.

According to the present invention a slip ring unit 61 is placed in the rotor centre axis 30 in the front end of the generator 41, having its static part 63 mounted in the rotor hub centre axis 30 near the frontal end of the non-rotational shaft 19 by means of a bracket 69 and its rotating part 65 attached to the generator rotor 45 by means of an arm 67.

The embodiment shown in Figure 2 is similar to the embodiment shown in Figure 1 with the exception that the generator 41 is mounted on its own bearings 25, 27 and it is connected to the rotor hub 17 by means of a coupling 33.

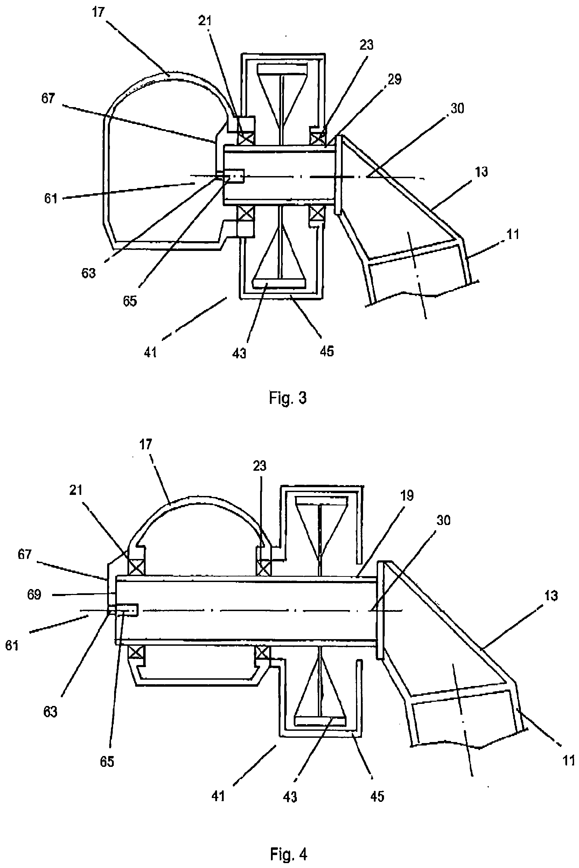

Figures 3, 4 and 5 show three embodiments of a direct drive wind turbine having the generator 41 placed down wind the rotor hub 17 incorporating a slip ring unit 61 according the present invention.

On Figure 4 it can be seen a wind turbine comprising a tower 11 supporting means housed inside a nacelle cover (not shown) for converting the rotational energy of the wind turbine rotor into electrical energy by means of a generator 41 preferably a permanent magnet generator. The wind turbine rotor comprises a rotor hub 17 and, typically, three blades. The rotor hub 17 is placed on two main bearings 21, 23, the first bearing 21 being placed near to the rotor hub front and the second bearing 23 near to the rotor hub rear. Both bearings 21, 23 are positioned on a non-rotating main shaft 19 connected to the wind turbine supporting frame 13. The wind turbine generator 41 is placed behind the rotor hub 17. The generator stator 43 is connected to the non-rotating main shaft 19 and the generator rotor 45 is connected to the rotor hub 17.

According to the present invention a slip ring unit 61 is placed in the rotor hub centre axis 30 in the front end of the generator 41, having its static part 63 mounted in the rotor centre axis 30 near the frontal end of the non-rotational shaft 19 by means of a bracket 69 and its rotating part 65 attached to the rotor hub 17 by means of an arm 67.

The embodiment shown in Figure 3 is similar to the embodiment shown in Figure 4 with the exception that the generator rotor 45 is supported by bearings 21, 23 and the rotor hub 17 is rigidly connected to the generator rotor 45.

The embodiment shown in Figure 5 is similar to the embodiment shown in Figure 3 with the exception that the generator rotor 45 is supported by a moment bearing 29.

One advantage of this invention is that the position of the slip ring unit 61 in the front end of the generator 41 does not imply constrains for its design so that it can be optimized regarding ideal transmission, allowing particularly that any commercial unit may be used just aligning the interfaces.

Another advantage of the present invention is that the slip ring unit 61 can be easily detachable after its mounting so service staff can get access to rotor hub 17 or generator 41.

Although the present invention has been fully described in connection with preferred embodiments, it is evident that modifications may be introduced within the scope thereof, not considering this as limited by these embodiments, but by the contents of the following claims.

## Claims

1. Wind turbine comprising a generator (41) directly driven by a wind rotor comprising a rotor hub (17) and at least one blade, a tower (11), a supporting frame (13) mounted on the tower (11) and a slip ring unit (61) arranged for providing electrical power to devices installed in a wind turbine rotating part and/or for transferring electrical signals to/from said devices, the rotor hub (17) and the generator stator (43) being supported by a non-rotating shaft (19) attached to the supporting frame (13), said slip ring unit (61) being mounted on a front end of the non-rotating shaft (19) along the centre axis (30) of the rotor hub (17) and having a rotating part (55, 63) connected to a rotating wind turbine component and a static part (51, 65) connected to a non-rotating wind turbine component,
the rotating part (55, 63) comprises a rotatable shaft (57) connected to the rotating wind turbine component such that the rotatable shaft (57) rotates within the static part (51, 65) of the slip ring unit (61),
**characterized in that**:
the slip ring unit (61) is detachably mounted on the front end of the non-rotating shaft (19) by means of a first connector (63) and a second connector (69);
the first connector (63) connects the rotatable shaft (57) of the rotating part (55, 63) of the slip ring unit (61) to the rotating wind turbine component such that the rotatable shaft (57) rotates within the static part (51, 65) of the slip ring unit (61);
the second connector (69) connects the static part (51, 65), within which the rotating part (55, 63) of the slip ring unit (61) rotates, to the front end of the non-rotating shaft (19);
and **in that** said second connector (69) is a bracket that enables supporting the static part (51, 65) on the front end of the non-rotating shaft (19).

2. Wind turbine according to claim 1, **characterized in that**:
- the generator (41) is placed upwind the wind rotor;
- said rotating wind turbine component is the generator rotor (45);
- said non-rotating wind turbine component is the non-rotating shaft (19).

3. Wind turbine according to claim 2, **characterized in that** the rotor hub (17) and the generator rotor (45), the latter being rigidly attached to the first, are supported by two common bearings (21, 23) placed in the rotor hub (17).

4. Wind turbine according to claim 2, **characterized in that** the rotor hub (17) and the generator rotor (45), the latter being rigidly attached to the first by means of a coupling (33), are supported by separate bearings (21, 23; 25, 27).

5. Wind turbine according to any of claims 3-4 **characterized in that** said first connector (67) is an arm connecting the slip ring unit rotating part (55, 63) with the generator rotor (45).

6. Wind turbine according to any of claim 1, **characterized in that**:
- the generator (41) is placed downwind the wind rotor;
- said rotating wind turbine component is the rotor hub (17);
- said non-rotating wind turbine component is the non-rotating shaft (19).

7. Wind turbine according to claim 7, **characterized in that** the generator rotor (45) and the rotor hub (17), the latter being rigidly attached to the first, are supported by two common bearings (21, 23) placed in the generator rotor (45).

8. Wind turbine according to claim 6, **characterized in that** the generator rotor (45) and the rotor hub (17), the first being rigidly attached to the latter, are supported by two common bearings (21, 23) placed in the rotor hub (17).

9. Wind turbine according to claim 6, **characterized in that** the generator rotor (45) and the rotor hub (17), the latter being rigidly attached to the first, are supported by a common moment bearing (29) placed in the generator rotor (45).

10. Wind turbine according to any of claims 7-9 characterized in thatsaid first connector (67) is an arm connecting the slip ring unit rotating part (55, 63) with the rotor hub (17).

11. Wind turbine according to any of claims 1-10, **characterized in that** the generator (41) is a permanent magnet generator.

## Patentansprüche

1. Windkraftanlage mit einem Generator (41), der direkt von einem Windrotor angetrieben wird, der eine Rotornabe (17) und mindestens einen Flügel, einen Turm (11), einen am Turm (11) montierten Tragrahmen (13) und eine Schleifringeinheit umfasst (61), die zum Bereitstellen von elektrischer Energie für in einem drehenden Teil einer Windkraftanlage angeordnete Vorrichtungen und/oder zum Übertragen elektrischer Signale von/zu den Vorrichtungen, wobei die Rotornabe (17) und der Generatorstator (43) von einer nicht drehenden Welle (19) gehalten werden, die am Tragrahmen (13) befestigt ist, wobei die Schleifringeinheit (61) an einem vorderen Ende der nicht drehenden Welle (19) entlang der Mittelachse (30) der Rotornabe (17) angebracht ist und einen rotierenden Teil (55, 63) aufweist, der mit einer rotierenden Windkraftanlagenkomponente verbunden ist, und einen statischen Teil (51, 65), der mit einer nicht drehenden Windkraftanlagenkomponente verbunden ist,
der drehende Teil (55, 63) eine drehbare Welle (57) umfasst, die mit der drehenden Windkraftanlagenkomponente verbunden ist, sodass sich die drehbare Welle (57) innerhalb des statischen Teils (51, 65) der Schleifringeinheit (61) dreht,
**dadurch gekennzeichnet, dass**:
die Schleifringeinheit (61) mit Hilfe eines ersten Verbinders (63) und eines zweiten Verbinders (69) lösbar am vorderen Ende der nicht drehenden Welle (19) angebracht ist;
der erste Verbinder (63) die drehbare Welle (57) des drehenden Teils (55, 63) der Schleifringeinheit (61) mit der drehenden Windkraftanlagenkomponente verbindet, sodass sich die drehbare Welle (57) innerhalb des statischen Teils (51, 65) der Schleifringeinheit (61) dreht;
der zweite Verbinder (69) den statischen Teil (51, 65), in dem sich der drehende Teil (55, 63) der Schleifringeinheit (61) dreht, mit dem vorderen Ende der nicht drehenden Welle (19) verbindet;
und dadurch, dass der zweite Verbinder (69) eine Klammer ist, die ein Halten des statischen Teils (51, 65) am vorderen Ende der nicht drehenden Welle (19) ermöglicht.

2. Windkraftanlage nach Anspruch 1, **dadurch gekennzeichnet, dass**:
- der Generator (41) in Windrichtung von dem Windrotor angeordnet ist;
- die drehende Windkraftanlagenkomponente der Generatorrotor (45) ist;
- die nicht drehende Windkraftanlagenkomponente die nicht drehende Welle (19) ist.

3. Windkraftanlage nach Anspruch 2, **dadurch gekennzeichnet, dass** die Rotornabe (17) und der Generatorrotor (45), wobei letztgenannter starr an erstgenannter befestigt ist, von zwei gemeinsamen Lagern (21, 23) gehalten werden, die in der Rotornabe (17) angeordnet sind.

4. Windkraftanlage nach Anspruch 2, **dadurch gekennzeichnet, dass** die Rotornabe (17) und der Generatorrotor (45), wobei letztgenannter mit Hilfe einer Kupplung (33) starr am erstgenannten befestigt ist, durch separate Lager (21, 23, 25, 27) gehalten werden.

5. Windkraftanlage nach einem der Ansprüche 3 bis 4, **dadurch gekennzeichnet, dass** der erste Verbinder (67) ein Arm ist, der den rotierenden Teil (55, 63) der Schleifringeinheit mit dem Generatorrotor (45) verbindet.

6. Windkraftanlage nach Anspruch 1, **dadurch gekennzeichnet, dass**:
- der Generator (41) in Windrichtung nach dem Windrotor angeordnet ist;
- die drehende Windkraftanlagenkomponente die Rotornabe (17) ist;
- die nicht drehende Windkraftanlagenkomponente die nicht drehende Welle (19) ist.

7. Windkraftanlage nach Anspruch 7, **dadurch gekennzeichnet, dass** der Generatorrotor (45) und die Rotornabe (17), wobei letztgenannte starr am erstgenannten befestigt ist, von zwei gemeinsamen Lagern (21, 23) gehalten werden, die im Generatorrotor (45) angeordnet sind.

8. Windkraftanlage nach Anspruch 6, **dadurch gekennzeichnet, dass** der Generatorrotor (45) und die Rotornabe (17), wobei erstgenannte starr am letztgenannten befestigt ist, von zwei gemeinsamen Lagern (21, 23) gehalten werden, die in der Rotornabe (17) angeordnet sind.

9. Windkraftanlage nach Anspruch 6, **dadurch gekennzeichnet, dass** der Generatorrotor (45) und die Rotornabe (17), wobei letztgenannte starr am erstgenannten befestigt ist, von einem gemeinsamen Momentenlager (29) gehalten werden, das im Generatorrotor (45) angeordnet ist.

10. Windkraftanlage nach einem der Ansprüche 7 bis 9, **dadurch gekennzeichnet, dass** der erste Verbinder (67) ein Arm ist, der den rotierenden Teil (55, 63) der Schleifringeinheit mit der Rotornabe (17) verbindet.

11. Windkraftanlage nach einem der Ansprüche 1 bis 10, **dadurch gekennzeichnet, dass** der Generator (41) ein Permanentmagnetgenerator ist.

## Revendications

1. Éolienne comprenant un générateur (41) entraîné directement par un rotor éolien comprenant un moyeu de rotor (17) et au moins une pale, une tour (11), un cadre de support (13) monté sur la tour (11) et une unité de bague collectrice (61) conçue pour fournir de l'énergie électrique à des dispositifs installés dans une partie rotative d'éolienne et/ou pour transférer des signaux électriques vers/depuis lesdits dispositifs, le moyeu de rotor (17) et le stator de générateur (43) étant supportés par un arbre non rotatif (19) fixé au châssis de support (13), ladite unité de bague collectrice (61) étant montée sur une extrémité avant de l'arbre non rotatif (19) le long de l'axe central (30) du moyeu de rotor (17) et ayant une partie rotative (55, 63) connectée à un composant d'éolienne rotatif et une partie statique (51, 65) connectée à un composant d'éolienne non rotatif,
la partie rotative (55, 63) comprend un arbre tournant (57) relié au composant d'éolienne rotatif de sorte que l'arbre tournant (57) tourne dans la partie statique (51, 65) de l'unité de bague collectrice (61),
**caractérisée en ce que** :
l'unité de bague collectrice (61) est montée de manière amovible sur l'extrémité avant de l'arbre non rotatif (19) au moyen d'un premier raccord (63) et d'un second raccord (69) ;
le premier raccord (63) relie l'arbre tournant (57) de la partie rotative (55, 63) de l'unité de bague collectrice (61) au composant d'éolienne rotatif de sorte que l'arbre tournant (57) tourne dans la partie statique (51, 65) de l'unité de bague collectrice (61) ;
le second raccord (69) relie la partie statique (51, 65) dans laquelle tourne la partie rotative (55, 63) de l'unité de bague collectrice (61), à l'extrémité avant de l'arbre non rotatif (19) ;
et **en ce que** ledit second raccord (69) est un support qui permet de supporter la partie statique (51, 65) sur l'extrémité avant de l'arbre non rotatif (19).

2. Éolienne selon la revendication 1, **caractérisée en ce que** :
- le générateur (41) est placé contre le vent du rotor éolien ;
- ledit composant d'éolienne rotatif est le rotor de générateur (45) ;
- ledit composant d'éolienne non rotatif est l'arbre non rotatif (19).

3. Éolienne selon la revendication 2, **caractérisée en ce que** le moyeu du rotor (17) et le rotor de générateur (45), ce dernier étant fixé rigidement au premier, sont supportés par deux paliers communs (21, 23) placés dans le moyeu du rotor (17).

4. Éolienne selon la revendication 2, **caractérisée en ce que** le moyeu du rotor (17) et le rotor de générateur (45), ce dernier étant fixé rigidement au premier par un couplage (33), sont supportés par des paliers séparés (21, 23 ; 25, 27).

5. Éolienne selon l'une quelconque des revendications 3 et 4, **caractérisée en ce que** ledit premier raccord (67) est un bras reliant la partie rotative (55, 63) de l'unité de bague collectrice au rotor de générateur (45).

6. Éolienne selon la revendication 1, **caractérisée en ce que** :
- le générateur (41) est placé sous le vent du rotor éolien ;
- ledit composant d'éolienne rotatif est le moyeu de rotor (17) ;
- ledit composant d'éolienne non rotatif est l'arbre non rotatif (19).

7. Éolienne selon la revendication 7, **caractérisée en ce que** le rotor du générateur (45) et le moyeu du rotor (17), ce dernier étant fixé rigidement au premier, sont supportés par deux paliers communs (21, 23) placés dans le rotor du générateur (45).

8. Éolienne selon la revendication 6, **caractérisée en ce que** le rotor de générateur (45) et le moyeu du rotor (17), le premier étant fixé rigidement au dernier, sont supportés par deux paliers communs (21, 23) placés dans le moyeu du rotor (17).

9. Éolienne selon la revendication 6, **caractérisée en ce que** le rotor de générateur (45) et le moyeu de rotor (17), ce dernier étant fixé rigidement au premier, sont supportés par un palier à couple commun (29) placé dans le rotor de générateur (45).

10. Éolienne selon l'une quelconque des revendications 7 à 9, **caractérisée en ce que** ledit premier raccord (67) est un bras reliant la partie rotative de l'unité de bague collectrice (55, 63) au moyeu de rotor (17).

11. Éolienne selon l'une quelconque des revendications 1 à 10, **caractérisée en ce que** le générateur (41) est un générateur à aimant permanent.
